# EUROPÄISCHE PATENTSCHRIFT

(11) **EP 1 774 201 B1**
(45) Veröffentlichungstag und Bekanntmachung des Hinweises auf die Patenterteilung: **16.01.2008**
(21) Anmeldenummer: 05764101.1
(22) Anmeldetag: 18.07.2005
(51) Int. Cl.: F16H 25/22, B62D 5/04

(54) **KUGELSCHRAUGETRIEBE FÜR EIN ELEKTROMECHANISCHES LENKSYSTEM UND MUTTER FÜR EIN KUGELSCHRAUBGETRIEBE**
BALL BEARING HELICAL GEARING FOR AN ELECTROMECHANICAL STEERING SYSTEM AND NUT FOR A BALL BEARING HELICAL GEARING
ENGRENAGE HELICOIDAL A BILLES POUR SYSTEME DE DIRECTION ELECTROMECANIQUE ET ECROU POUR ENGRENAGE HELICOIDAL A BILLES

(30) Priorität: 03.08.2004 DE 102004037599
(43) Veröffentlichungstag der Anmeldung: 18.04.2007
(73) Patentinhaber: ZF Lenksysteme GmbH, 73527 Schwäbisch Gmünd (DE)
(72) Erfinder: BUDAKER, Martin, 73540 Heubach (DE); LEIMBACH, Klaus, Dieter, 73569 Eschach (DE); BULLING, Walter, 73550 Wissgoldingen (DE); HETZEL, Oliver, 73550 Waldstetten (DE); BÖRROTH, Klaus, 73565 Spraitbach (DE); WIRTH, Oswald, 73579 Schechingen (DE)
(86) Internationale Anmeldenummer: PCT/EP2005/053424
(87) Internationale Veröffentlichungsnummer: WO 2006/013148

(56) Entgegenhaltungen:
- EP-A- 1 026 067
- EP-A- 1 350 988
- DE-U1- 29 504 812

## Beschreibung

Die Erfindung betrifft ein Kugelschraubgetriebe für ein elektromechanisches Lenksystem eines Fahrzeugs, insbesondere für ein Kraftfahrzeug, nach dem Oberbegriff des Anspruchs 1 und eine Mutter für ein Kugelschraubgetriebe eines Lenksystems nach Anspruch 14.

Kugelschraubgetriebe für Lenksysteme oder Kugelumlauf-Lenkgetriebe für Fahrzeuge sind bekannt. Die EP 0 133 003 B1 beschreibt ein Kugelschraubgetriebe für ein elektromechanisches Lenksystem eines Kraftfahrzeugs mit einer mit einer Lenkhandhabe über ein Ritzel und eine Zahnstange wirkverbundenen Gewindespindel, die schraubenförmige Kugellaufbahnen um deren Umfang aufweist, wobei die Gewindespindel eine axial unbeweglich in einem Getriebegehäuse gelagerte Mutter durchragt, gegenüber der die Gewindespindel bei Rotation der Mutter axial bewegbar ist. Die Mutter weist schraubenförmige Kugellaufbahnen auf. Die Kugellaufbahnen der Gewindespindel und der Mutter dienen zur gemeinsamen Aufnahme von lastübertragenden Kugeln innerhalb des Axialbereiches der Mutter. Die Gewindespindel steht über eine getriebliche Verbindung aus Spurstangen und Radlenkhebeln mit gelenkten Rädern des Fahrzeugs in Wirkverbindung, wobei bei einer axialen Bewegung der Gewindespindel ein Lenkwinkel der gelenkten Räder des Fahrzeugs verändert wird.

Die Laufeigenschaften solcher Kugelschraubgetriebe sind von der geometrischen Ausgestaltung der Kugellaufbahnen der Gewindespindel und der Mutter im tragenden Gewindebereich und insbesondere von den geometrischen Verhältnissen der Laufbahn der Kugeln von der Kugelführung über die Lastein- und Lastauslaufzone in die Mutter und deren Gewindegänge abhängig. Bei der Lasteinlaufzone und Lastauslaufzone muß eine optimal gestaltete Geometrie derart beschaffen sein, dass die jeweilige Kugel aus der Kugelführung definiert und ruckfrei in den tragenden Bereich des Gewindeganges, in dem die Kugel den äußeren Belastungen durch Vorspannkraft und Lastkraft ausgesetzt ist, einläuft. Durch die geometrischen Verhältnisse bestimmt sich ein ruckfreier, mit konstantem Drehmoment erfolgender Lauf des Kugelschraubgetriebes und auch die Wärme- und Geräuschentwicklung des Kugelschraubgetriebes.

Die bekannten Lenkgetriebe weisen das Prinzip der Einzelkettenumlenkung der Kugelketten in der Lenkmutter auf, wobei die Kugellaufbahn im Bereich der Kugelführung unterbrochen ist und das Kugelschraubgetriebe bei Querkraftbeaufschlagung der Gewindespindel, also besonders bei solchen elektromechanischen Lenksystemen auftretenden, hohen Kräften senkrecht zur Längsachse der Zahnstange und der Gewindespindel zu Geräuschentwicklung neigt, da die Gewindespindel und die an ihr festgelegte getriebliche Verbindung zu den gelenkten Rädern des Fahrzeugs im Bereich der Kugelführung nicht gleichförmig radial von den Kugeln abgestützt ist. Zudem werden die Kugeln insbesondere bei Querkraftbeaufschlagung der Gewindespindel in einem Übergangsbereich der Kugelführung zu den Kugellaufbahnen in einen tragenden Gewindebereich gedrückt, wobei die übliche, in einer kreisförmigen Öffnung mit einer Einlaufkante endende Kugelführung zu einem ruckartigen Eintrag oder Austrag der Kugeln in die Lasteinlauf- oder Lastauslaufzone der Kugellaufbahnen beiträgt.

Ein weiteres Kugelschraubgetriebe mit den Merkmalen der Präambel des Anspruchs 1 und mit einer Mutter für ein Kugelschraubgetriebe mit den Merkmalen der Präambel des Anspruchs 13 ist aus der DE 295 04 812 U bekannt.

Der Erfindung liegt die Aufgabe zugrunde, ein Kugelschraubgetriebe für ein elektromechanisches Lenksystem zu schaffen, dessen Lasteinlauf- und Lastauslaufzone einen gleichförmigen, geräuscharmen Lauf des Kugelschraubgetriebes ermöglicht.

Die Aufgabe wird mit einem Kugelschraubgetriebe mit den Merkmalen des Anspruchs 1 und mit einer Mutter für ein Kugelschraubgetriebe mit den Merkmalen des Anspruchs 13 gelöst.

Dadurch dass in dem Kugelschraubgetriebe die Kugeln in einer geschlossenen Kette in den Kugellaufbahnen angeordnet sind, ist ein ruckfreier Einlauf und Austrag der Kugeln in die Kugellaufbahnen der Gewindespindel und der Mutter ermöglicht. Durch die geschlossene Kugelkette in den Kugellaufbahnen ergibt sich keine Unterbrechung der tragenden Kugellaufbahn und somit auch nicht die Möglichkeit des Erzeugens von Schlaggeräuschen durch Querkrafteinfluss an der Gewindespindel.

Bevorzugte Ausführungen der Erfindung ergeben sich aus den Unteransprüchen.

In einem besonders bevorzugten Ausführungsbeispiel des Kugetschraubgetriebes sind dessen Lasteinlauf- und Lastauslaufzone der Mutter in ihrem Übergangsbereich zu den Gewindenuten so gestaltet, dass sich eine etwa stetig progressiv verändernde Kontaktfläche zwischen den Kugellaufbahnen der Gewindespindel und den Kugeln ergibt. Die Kugeln werden über die sich allmählich vergrößernde oder verkleinemde Kontaktfläche zu den Kugellaufbahnen der Gewindespindel und die sich dadurch ebenfalls allmählich an den Kugeln ändernde Rollreibung nicht ruckartig in diesem Übergangsbereich beschleunigt oder verzögert. Die Kugeln laufen aus der Kugelführung in der Mutter entlang von zwei Kanten eines gotischen Laufbahnprofils, bis sie in Höhe des Anlagen-Druckwinkels in den Gewindegang eintreten. Die Kugeln werden dadurch sukzessive der Rollreibung durch die Relativbewegung der Gewindespindel und der Mutter ausgesetzt bzw. entzogen und von selbst mit in oder aus einem Kugetrücklaufkanal an der Mutter mitgenommen. Die Kugeln werden dadurch im Gegensatz zu dem bekannten Stand der Technik nicht ruckartig nachgeschoben und in die Gewindegänge, die von den Kugellaufbahnen an der Mutter und der Gewindespindel gemeinsam gebildet werden, ruckartig gepresst.

Es kann zweckmäßig sein, in dem Kugelschraubgetriebe zwei oder mehrere Kugelketten mit zwei oder mehreren Gewindegängen und einer Kugelrückführung aus einem Kugelrücklaufkanal und Kugelumlenkstücken zu bilden. Die Kugelrückführung mit den Kugelumlenkstücken und dem Kugelrücklaufkanal ist bevorzugt in dem Mantel der Mutter untergebracht Das Kugelumlenkstück ist bevorzugt in einem Umform- und/oder Gießverfahren einstückig gebildet und aus einem Metall- oder Nichtmetallwerkstoff gebildet. Der Kugelrücklaufkanal verläuft bevorzugt mit geringem radialem Abstand zum Umfang der Gewindespindel im wesentlichen oder völlig innerhalb der Mutter. Der Kugelrücklaufkanal, der bevorzugt als im wesentlichen axial geführte Bohrung im Mantel der Mutter verläuft, ist tangential zu dem Übergangsbereich des Kugelumlenkstückes zu den Kugellaufbahnen geführt, so dass das jeweilige Kugelumlenkstück als Einlegeteil für die Mutter gebildet sein kann und die Öffnung des Kugelrücklaufkanals und des Kugelumlenkstückes nach Einlegen des jeweiligen Kugelumlenkstückes in die Mutter fluchtend zueinander zu liegen kommen.

Die Kugelumlenkstücke sind in einer montagefreundlichen, besonders bevorzugten Ausführungsform der Mutter an axialen Enden der Mutter oder in deren Nähe positioniert, so dass die Kugelumlenkstücke auf einfache Weise mit je einem axialen Sicherungselement, wie einem Sprengring und/oder einem Federelement, wie einer axial zwischen dem Sprengring und dem Kugelumlenkstück angeordneten, vorzugsweise mit einem Elastomeren, wie Gummi, beschichteten Scheibe festgelegt werden können. Die Kugeln wälzen sich zumindest im Bereich der Kugelumlenkstücke über ein gotisches Laufbahnprofil ab.

Die Erfindung wird nun näher anhand eines Ausführungsbeispiels und anhand der beiliegenden Zeichnung beschrieben.
- Fig. 1: zeigt einen Längsschnitt eines Kugelschraubgetriebes mit einem etektromechanischen Antrieb,
- Fig. 2: zeigt einen teilweisen Längsschnitt und eine Ansicht des Kugelschraubgetriebes in Fig. 1,
- Fig. 3: zeigt eine perspektivische Ansicht eines Kugelumlenkstückes,
- Fig. 4: zeigt eine Ansicht einer Stirnseite einer Mutter des Kugelschraubgetriebes in Fig. 1,
- Fig. 5: zeigt einen Querschnitt durch ein gotisches Laufbahnprofil mit schrägem Anschnitt der Kugelführung der Mutter des Kugelschraubgetriebes in Fig. 1.

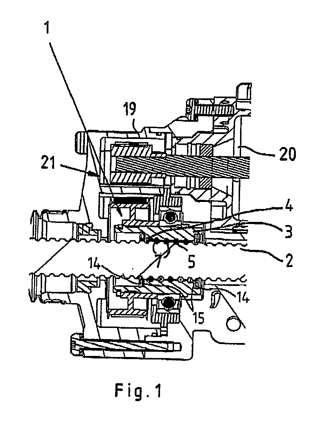

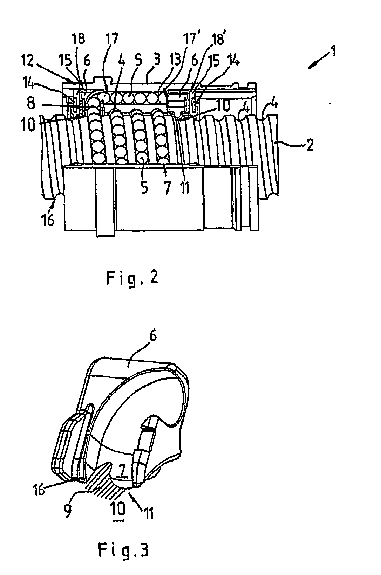

In Figur 1 ist in einem Längsschnitt ein Kugelschraubgetriebe 1 für ein elektromechanisches Hilfskraft-Lenksystem eines Kraftfahrzeugs gezeigt. Eine drehbar in einem Getriebegehäuse 19 gehaltene Gewindespindel 2 ist mit einer Lenkhandhabe des Kraftfahrzeugs über eine nicht gezeigte Zahnstange, auf der ein drehfest mit der Lenkhandhabe verbundenes Ritzel kämmt, verbunden. In dem Getriebegehäuse 19 ist sowohl das Kugelschraubgetriebe 1, die Gewindespindel 2, als auch ein Elektromotor 20, der über ein Untersetzungsgetriebe 21 auf eine Mutter 3 wirkt, angeordnet. Die Gewindespindel 2 weist um ihren Umfang schraubenförmige Kugellaufbahnen 4 mit etwa gleicher Steigung wie schraubenförmige Kugellatobahnen 4 in der Mutter 3 auf. Die Mutter 3 ist von der Gewindespindel 2 durchragt und über Kugeln 5 einer Kugelkette 7, die geschlossen in den Kugellaufbahnen 4 von Gewindespindel 2 und Mutter 3, sowie in einer Kugelrückführung 12, bestehend aus je einem Kugelumlenkstück 6 (vgl. Fig. 2) und einem Kugelrücklaufkanal 13, angeordnet sind, mit der Gewindespindel 2 wirkverbunden. Die Gewindespindel 2 verschiebt sich bei Drehung der Mutter 3 axial auf dieser. An der Gewindespindel 2 ist eine getriebliche Verbindung, bestehend aus Spurstangen und Radlenkhebeln zu lenkbaren Rädern des Kraftfahrzeugs festgelegt, so dass bei einer Axialverschiebung der Gewindespindel 2 auf der Mutter 3 ein Lenkwinkel der lenkbaren Räder verändert wird. Die Kugeln 5 laufen in den Kugellaufbahnen 4 mit kleinstmöglichem Spiel.

Um ein ruckfreies Einführen und Austragen der Kugeln 5 in die Kugellaufbahnen 4 zu ermöglichen und um eine stetige, gleichförmige radiale Abstützung der Gewindespindel 2 an der Mutter 3 zu gewährleisten, sind ein oder mehrere Kugelketten 7 vorgesehen, die einen geschlossenen Gewindegang von mehr als 360 ° bilden, ohne Unterbrechung der tragenden Kugellaufbahn. Zudem sind an den axialen Enden 17,17' eines Kugelrücklaufkanales 13 Kugelumlenkstücke 6 in die Wand der Mutter 3 eingelegt und festgelegt, die so gestaltet sind, dass sie in ihrem Übergangsbereich 8 zu den Kugellaufbahnen 4 eine stetig zu den Kugellaufbahnen 4 hin verkleinernde Grundfläche aufweisen, die wiederum eine stetig sich progressiv verändernde Kontaktfläche 9 der Kugeln 5 an die Kugellaufbahnen 4 ermöglicht. Dadurch lassen sich die Kugeln 5 infolge von Rollreibung bei einer Relativbewegung von Gewindespindel 2 und Mutter 3 in einer Lasteinlauf- Lastauslaufzone 10 an diesen sich aufspreitenden Enden 11 der Mutter 3 und deren Kugelumlenkstücke 6 ruckfrei bewegen (vgl. Fig. 2, 3).

In Fig. 2 ist in einem teilweisen Längsschnitt und in einer Ansicht des Kugelschraubgetriebes 1 in Fig. 1 der Aufbau des Kugelschraubgetriebes 1 mit einer einzigen Kugelkette 7, die sich über etwa vier Gewindegänge der Mutter 3 erstreckt, gezeigt. Für gleiche Bauteile gelten dieselben Bezugszeichen wie in Fig. 1.

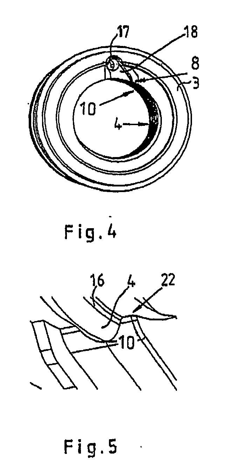

Wie die Fig. 2 und 4 zeigen, ist der Kugelrücklaufkanal 13 im Mantel der Mutter 3 etwa axial geführt, sodass dessen Öffnung tangential zum jeweiligen Ende 11 der Kugelumlenkstücke 6 angeordnet ist. Die Kugelumlenkstücke 6 übernehmen somit sowohl die Umlenkung der Kugeln 5 von dem Kugefrücklaufkanal 13, als auch die Ein- und Ausleitung der Kugeln 5 aus den Kugellaufbahnen 4.

Die Kugelumlenkstücke 6 sind, wie Fig. 3 zeigt, einstückig gegossen. Sie können, wie dies die Figuren 2 und 4 verdeutlichen, in axialer Richtung an Enden der Mutter 3 in passgenaue Öffnungen 18,18' eingelegt und mit je einem axialen Sicherungselement 14, wie einem Sprengring und bevorzugt mit einem Federelement 15, wie einer mit einem elastomeren Werkstoff, wie Gummi, beschichteten Stahlscheibe, in der Mutter 3 festgelegt werden.

Fig. 5 zeigt eine Ansicht einer Lasteinlauf- und Lastauslaufzone 10 an der Mutter 3 im Bereich eines Anlagen- Druckwinkels 22 mit einem gotischen Laufbahnprofil 16, das eine Gabelstruktur dadurch erhält, dass das Laufbahnprofil 16 schräg angeschnitten ist und sich eine linienförmige Führung der Kugeln 5 in diesem Bereich gabelförmig aufspaltet, wodurch die Kugeln 5 von selbst infolge der Rollreibung bei einer Relativbewegung zwischen Gewindespindel 2 und Mutter 3 mitgenommen werden. Dadurch ist ein geräuscharmer, ruckfreier Betrieb des Kugelschraubgetriebes 1 gewährleistet.

## Patentansprüche

1. Kugelschraubgetriebe für ein elektromechanisches Lenksystem eines Fahrzeugs, insbesondere für ein Kraftfahrzeug, mit einer Gewindespindel (2), die eine Mutter (3) durchragt, wobei die Gewindespindel (2) und die Mutter (3) mit Kugellaufbahnen (4) zur gemeinsamen Aufnahme von lastübertragenden Kugeln (5) innerhalb der Mutter (3) versehen sind und wobei die Mutter (3) Kugelumlenkstücke (6) zur Herausführung und Einführung der Kugeln (5) in die Kugellaufbahnen (4) aufweist, wobei die Kugeln (5) in einer geschlossenen Kette (7) über etwa zwei oder mehrere Gewindegänge in den Kugellaufbahnen (4) angeordnet sind, **dadurch gekennzeichnet, dass** die Mutter (3) mit den Kugelumlenkstücken (6) in ihrem Übergangsbereich (8) zu den Kugellaufbahnen (4) so gestaltet ist, dass eine etwa stetig progressiv sich verändernde Kontaktfläche (9) der Kugellaufbahnen (4) der Gewindespindel (2) zu den Kugeln (5) zum definierten Ein- oder Auslauf der Kugeln (5) an einer Lasteinlauf- und Lastauslaufzone (10) in dem Übergangsbereich (8) gewährleistet ist.

2. Kugelschraubgetriebe nach Anspruch 1, **dadurch gekennzeichnet, dass** die Kugelumlenkstücke (6) in ihrem Übergangsbereich (8) etwa stetig in ihrer Grundfläche sich verringernde, aufspaltende Enden (11) aufweisen.

3. Kugelschraubgetriebe nach einem der Ansprüche 1 oder 2, **dadurch gekennzeichnet, dass** die Kugeln (5) in dem Übergangsbereich (8) infolge der Rollreibung bei einer Relativbewegung von Gewindespindel (2) und Mutter (3) in oder aus der Lasteinlauf- oder Lastauslaufzone (10) bewegt sind.

4. Kugelschraubgetriebe nach einem der Ansprüche 1 bis 3, **dadurch gekennzeichnet, dass** das Kugelschraubgetriebe (1) zwei oder mehrere Kugelketten (7) mit mehr als einem geschlossenen Gewindegang und einer Kugelrückführung (12), bestehend aus einem Kugelrücklaufkanal (13) und Kugelumlenkstücken (6) aufweist.

5. Kugelschraubgetriebe nach einem der Ansprüche 1 bis 4, **dadurch gekennzeichnet, dass** die Kugelrückführung (12) in der Mutter (3) angeordnet ist.

6. Kugelschraubgetriebe nach einem der Ansprüche 1 bis 5, **dadurch gekennzeichnet, dass** das Kugelumlenkstück (6) einstückig gebildet ist.

7. Kugelschraubgetriebe nach einem der Ansprüche 1 bis 6, **dadurch gekennzeichnet, dass** das Kugelumlenkstück (6) durch ein Umform- oder Gießverfahren gebildet ist.

8. Kugelschraubgetriebe nach einem der Ansprüche 1 bis 7, **dadurch gekennzeichnet, dass** das Kugelumlenkstück (6) aus einem Metall- oder Nichtmetallwerkstoff gebildet ist.

9. Kugelschraubgetriebe nach einem der Ansprüche 4 bis 8, **dadurch gekennzeichnet, dass** der Kugelrücklaufkanal (13) im wesentlichen axial in der Mutter (3) verläuft.

10. Kugelschraubgetriebe nach einem der Ansprüche 4 bis 9, **dadurch gekennzeichnet, dass** der Kugelrücklaufkanal (13) etwa tangential zu dem Übergangsbereich (8) des Kugelumlenkstückes (6) zu den Kugellaufbahnen (4) geführt ist.

11. Kugelschraubgetriebe nach einem der Ansprüche 1 bis 10, **dadurch gekennzeichnet, dass** die Kugelumlenkstücke (6) mit einem axialen Sicherungselement (14) und/oder mit einem Federelement (15) in der Mutter (3) festgelegt sind.

12. Kugelschraubgetriebe nach einem der Ansprüche 1 bis 11, **dadurch gekennzeichnet, dass** ein gotisches Laufbahnprofil (16) der Mutter (3) in dem Übergangsbereich (8) durch einen schrägen Anschnitt gabelförmig gebildet ist.

13. Mutter für ein Kugelschraubgetriebe (1) eines Lenksystems, **dadurch gekennzeichnet, dass** die Mutter (3) zum ruckfreien Eintrag oder Austrag von Kugeln (5) des Kugelschraubgetriebes (1) eine Lasteinlauf- und Lastauslaufzone (10) mit Gabelstruktur aufweist, auf der Kugeln (5) aus einer Kugelrückführung (12) entlang von Kanten eines gotischen Laufbahnprofils (16) der Mutter (3) geführt sind bis sie in Höhe eines Anlage- oder Druckwinkels (22) in die Kugellaufbahn (4) eintreten.

## Claims

1. Ball screw mechanism for an electromechanical steering system of a vehicle, in particular for a motor vehicle, with a threaded spindle (2), which passes through a nut (3), the threaded spindle (2) and the nut (3) being provided with ball bearing raceways (4) for jointly receiving load-transmitting ball bearings (5) inside the nut (3), and the nut (3) having ball bearing reversal members (6) for removing and introducing the ball bearings (5) into the ball bearing raceways (4), the ball bearings (5) being arranged in a closed chain (7) over approximately two or more thread turns in the ball bearing raceways (4), **characterized in that** the nut (3) with the ball bearing reversal members (6) in its transitional area (8) to the ball bearing raceways (4) is designed so as to ensure an almost continuously progressive change in the contact area (9) between the ball bearing raceways (4) of the threaded spindle (2) and the ball bearings (5) for the defined entry or exit of the ball bearings, (5) at a load entry and load exit zone (10) in the transitional area (8).

2. Ball screw mechanism according to Claim 1, **characterized in that** the ball bearing reversal members (6), in their transitional area (8) diminishing almost continuously in their base area, have diverging ends (11).

3. Ball screw mechanism according to either of Claims 1 or 2, **characterized in that** the ball bearings (5) in the transitional area (8) are moved into or out of the load entry or load exit zone (10) due to the rolling friction occurring in a relative movement of the threaded spindle (2) and the nut (3).

4. Ball screw mechanism according to any one of Claims 1 to 3, **characterized in that** the ball screw mechanism (1) has two or more ball bearing chains (7) with more than one closed thread turn and a ball bearing return (12) comprising a ball bearing return channel (13) and ball bearing reversal members (6).

5. Ball screw mechanism according to any one of Claims 1 to 4, **characterized in that** the ball bearing return (12) is arranged in the nut (3).

6. Ball screw mechanism according to any one of Claims 1 to 5, **characterized in that** the ball bearing reversal member (6) is integrally formed.

7. Ball screw mechanism according to any one of Claims 1 to 6, **characterized in that** the ball bearing reversal member (6) is formed by a forming or casting process.

8. Ball screw mechanism according to any one of Claims 1 to 7, **characterized in that** the ball bearing reversal member (6) is formed from a metal or a non-metallic material.

9. Ball screw mechanism according to any one of Claims 4 to 8, **characterized in that** the ball bearing return channel (13) runs substantially in an axial direction in the nut (3).

10. Ball screw mechanism according to any one of Claims 4 to 9, **characterized in that** the ball bearing return channel (13) is led substantially at a tangent to the transitional area (8) of the ball bearing reversal member (6) to the ball bearing raceways (4).

11. Ball screw mechanism according to any one of Claims 1 to 10, **characterized in that** the ball bearing reversal members (6) are fixed in the nut (3) by an axial securing element (14) and/or a spring element (15).

12. Ball screw mechanism according to any one of Claims 1 to 11, **characterized in that** a gothic raceway profile (16) of the nut (3) is formed in the transitional area (8) by an oblique chamfer.

13. Nut for a ball screw mechanism (1) of a steering system, **characterized in that** the nut (3), for smooth entry or exit of the ball bearings (5) of the ball screw mechanism (1) has a load entry and load exit (10) with a fork structure, on which ball bearings (5) from a ball bearing return (12) are guided along edges of a gothic raceway profile (16) of the nut (3), until they enter the ball bearing raceway (4) at the height of a contact pressure angle (22).

## Revendications

1. Engrenage à vis à billes pour un système de direction électromécanique d'un véhicule, notamment pour un véhicule automobile, comprenant une tige filetée (2) qui traverse un écrou (3), la tige filetée (2) et l'écrou (3) étant munis de bandes de roulement pour billes (4) destinées à accueillir communément des billes (5) de transmission de charge à l'intérieur de l'écrou (3) et l'écrou (3) présentant des éléments de renvoi des billes (6) pour faire sortir et rentrer les billes (5) dans les bandes de roulement pour billes (4), les billes (5) étant disposées selon une chaîne fermée (7) sur environ deux pas de filet ou plus dans les bandes de roulement pour billes (4), **caractérisé en ce que** l'écrou (3) muni des éléments de renvoi des billes (6), dans sa zone de transition (8) vers les bandes de roulement pour billes (4), est configuré de manière à garantir une surface de contact (9) des bandes de roulement pour billes (4) de la tige filetée (2) avec les billes (5) qui varie progressivement et à peu près constamment en vue d'une entrée ou d'une sortie définie des billes (5) au niveau d'une zone d'entrée de charge et de sortie de charge (10) dans la zone de transition (8).

2. Engrenage à vis à billes selon la revendication 1, **caractérisé en ce que** les éléments de renvoi des billes (6) présentent dans leur zone de transition (8) des extrémités (11) fendues qui se rétrécissent peu à peu constamment dans leur surface de base.

3. Engrenage à vis à billes selon l'une des revendications 1 ou 2, **caractérisé en ce que** les billes (5) se déplacent dans la zone de transition (8) suite à un frottement par roulement lors d'un mouvement relatif de la tige filetée (2) et de l'écrou (3) dans ou hors de la zone d'entrée de charge ou de sortie de charge (10).

4. Engrenage à vis à billes selon l'une des revendications 1 à 3, **caractérisé en ce que** l'engrenage à vis à billes (1) présente deux chaînes de billes (7) ou plus comprenant plusieurs pas de filet fermés et un retour de billes (12) composé d'un canal de retour de billes (13) et d'éléments de renvoi des billes (6).

5. Engrenage à vis à billes selon l'une des revendications 1 à 4, **caractérisé en ce que** le retour de billes (12) est disposé dans l'écrou (3).

6. Engrenage à vis à billes selon l'une des revendications 1 à 5, **caractérisé en ce que** l'élément de renvoi des billes (6) est réalisé d'une seule pièce.

7. Engrenage à vis à billes selon l'une des revendications 1 à 6, **caractérisé en ce que** l'élément de renvoi des billes (6) est réalisé par un procédé de façonnage ou de moulage.

8. Engrenage à vis à billes selon l'une des revendications 1 à 7, **caractérisé en ce que** l'élément de renvoi des billes (6) se compose d'un matériau métallique ou non métallique.

9. Engrenage à vis à billes selon l'une des revendications 4 à 8, **caractérisé en ce que** le canal de retour de billes (13) s'étend pour l'essentiel dans le sens axial dans l'écrou (3).

10. Engrenage à vis à billes selon l'une des revendications 4 à 9, **caractérisé en ce que** le canal de retour de billes (13) est guidé de manière approximativement tangentielle à la zone de transition (8) de l'élément de renvoi des billes (6) vers les bandes de roulement pour billes (4).

11. Engrenage à vis à billes selon l'une des revendications 1 à 10, **caractérisé en ce que** les éléments de renvoi des billes (6) sont fixés dans l'écrou (3) avec un élément de blocage axial (14) et/ou avec un élément élastique (15).

12. Engrenage à vis à billes selon l'une des revendications 1 à 11, **caractérisé en ce qu'**un profil de bande de roulement (16) en besace de l'écrou (3) est réalisé en forme de fourche dans la zone de transition (8) par une entaille en biais.

13. Écrou pour un engrenage à vis à billes (1) d'un système de direction, **caractérisé en ce que** l'écrou (3) présente, pour l'entrée ou la sortie sans à-coups des billes (5) de l'engrenage à vis à billes (1), une zone d'entrée de charge et de sortie de charge (10) ayant une structure en fourche sur laquelle les billes (5) sont guidées depuis un retour de billes (12) le long des bords d'un profil de bande de roulement (16) en besace de l'écrou (3) jusqu'à ce qu'elles pénètrent dans la bande de roulement pour billes (4) à hauteur d'un angle de contact ou de pression (22).
